# EUROPÄISCHE PATENTSCHRIFT

(11) **EP 0 418 570 B1**
(45) Veröffentlichungstag und Bekanntmachung des Hinweises auf die Patenterteilung: **28.04.1993**
(21) Anmeldenummer: 90115955.8
(22) Anmeldetag: 21.08.1990
(51) Int. Cl.: E02D 31/00, E21B 43/38, E21B 43/40, C02F 9/00

(54) **Anordnung zum Reinigen von verunreinigtem Grundwasser**
Device for the purification of polluted ground water
Dispositif pour la purification des eaux souterraines polluées

(30) Priorität: 16.09.1989 DE 3931012; 06.10.1989 DE 3933426
(43) Veröffentlichungstag der Anmeldung: 27.03.1991
(73) Patentinhaber: IEG Industrie-Engineering GmbH, D-72770 Reutlingen (DE)
(72) Erfinder: Bernhardt, Bruno, D-7410 Reutlingen (DE)
(74) Vertreter: Möbus, Rudolf, Dipl.-Ing.

(56) Entgegenhaltungen:
- US-A- 4 543 186
- US-A- 4 766 957
- PATENT ABSTRACTS OF JAPAN vol. 11, no. 48 (M-561)(2495) 13 Februar 1987, & JP-A-61 211416 (TAKENAKA KOMUTEN) 19 September 1986

## Beschreibung

Die Erfindung betrifft eine Anordnung zum Reinigen von verunreinigtem Grundwasser und dem von ihm durchströmten Erdreich, mit einem bis in den Bereich des zu reinigenden Grundwassers getriebenen Schacht mit einer bereichsweise wasserdurchlässigen und bereichsweise wasserundurchlässigen Schachtwandung.

Der Erfindung liegt die Aufgabe zugrunde, eine Anordnung der eingangs genannten Art einfach in Aufbau und Anwendung auszubilden.

Die gestellte Aufgabe wird mit der Anordnung erfindungsgemäß dadurch gelöst, daß sie eine unterhalb des Grundwasserspiegels in einen zwischen wasserdurchlässigen Schlachtwandungsabschnitten liegenden wasserundurchlässigen Abschnitt der Schachtwandung dicht einsetzbare Trennwandung aufweist, die eine Öffnung für einen Durchgangskanal aufweist, der Teil des Strömungsweges einer Umwälzpumpe ist und oberhalb des Grundwasserspiegels im Brunnenschacht endet, und daß im Bereich des Brunnenschachtes Filter im Strömungsweg der Pumpe angeordnet sind.

Bei einer Anordnung gemäß der Erfindung wird die Reinigung innerhalb des eingebrachten Schachtes vorgenommen. Es entfällt ein Absaugen von Grundwasser aus einem Schacht und dessen Rückführung über zusätzlich eingebrachte Schluckschächte. Hierbei kann auch auf vorhandene gebohrte Brunnenschächte zurückgegriffen werden, sofern sie oberhalb des Grundwasserspiegels wenigstens bereichsweise eine wasserdurchlässige Schachtwandung aufweisen.

Diese Anordnung von Schluck- und Entnahmebrunnen übereinander in einem Schacht verhindert das Absenken des Grundwasserspiegels in der Umgebung des Brunnenschachtes, wie dies bei herkömmlichen Entnahmebrunnen der Fall ist. Dadurch wird die Gefahr von Gebäudeabsenkungen vermieden, die in der Nähe von Entnahmebrunnen beobachtet wurden. Darüber hinaus gewährleistet der konstante Grundwasserspiegel in der Umgebung des Brunnenschachtes eine gleichmäßige Fließgeschwindigkeit des Grundwassers in allen Bodenschichten. Im Gegensatz dazu treten bei Entnahmebrunnen durch das Absenken des Grundwasserspiegels höhere Strömungsgeschwindigkeiten in Brunnenschachtnähe auf. Dabei verdrängt Grundwasser aus Bodenschichten, die eine hohe Fließgeschwindigkeit des Wassers erlauben, Wasser aus Schichten mit langsamerer Strömungsgeschwindigkeit. Langsamer fließendes Grundwasser ist jedoch in der Regel stärker kontaminiert als schnellfließendes, so daß der Wirkungsgrad von Filteranlagen mit getrennten Schächten für Schluck- und Entnahmebrunnen nur gering ist.

Die Filter können zweckmäßig mindestens teilweise als Ringfilter vor wasserdurchlässigen Abschnitten der Schachtwandung oberhalb und/oder unterhalb der Trennwandung angeordnet sein. Vorteilhafterweise kann der Durchgangskanal, innerhalb welchem zweckmäßig die Umwälzpumpe angeordnet ist, auf einer Seite der Trennwandung zu einem Filtereinsätze aufweisenden Gehäuse erweitert sein, dessen Außenwandung mit Abstand von der Schachtwandung verläuft und das an seinem von der Trennwandung entfernten Ende eine Wassereinlaß- oder -auslaßöffnung aufweist. Die erfindungsgemäß ausgebildete Anordnung kann also ein Rohr aufweisen, mit welchem eine Brunnenbohrung nachträglich ausgekleidet werden kann, das bereits vor dem Einbauen beispielsweise durch Bohrungen abschnittsweise wasserdurchlässig gemacht wird und in solchen Bereichen mit Ringfiltern versehen wird. Dabei kann es in vielen Fällen auch genügen, wenn nur der Bohrungsbereich bis unterhalb des Grundwasserspiegels mit einer Schachtwandung der beschriebenen Art versehen wird. Die Anordnung gemäß der Erfindung kann aber auch allein mit den in dem Einsatzgehäuse vorgesehenen Filtern betrieben werden.

Die Trennwandung der Anordnung kann zweckmäßig durch einen topfartigen Einsatz gebildet sein, der auf seinem Außenmantel mit mindestens einem aufblasbaren Klemmschlauch als Befestigungsorgan versehen ist. Der topfartige Einsatz läßt sich zusammen mit dem mit ihm verbundenen, die Pumpe aufweisenden rohrförmigen Durchgangskanal und seinem Filtereinsatzgehäuse in einen Brunnenschacht bis unterhalb des Grundwasserspiegels absenken und dann durch Aufblasen der vorzugsweise mehreren äußeren Klemmschläuche in dem Brunnenschacht verspannen, wobei gleichzeitig eine Abdichtung des Spaltes zwischen dem topfartigen Einsatz und der Schachtwandung erreicht wird.

Die Filtereinsätze der Anordnung lassen sich nach dem vorgesehenen Wiederausbau der Anordnung nach bekannten Verfahren reinigen oder regenerieren. Dies gilt insbesondere für die in dem Filtereinsatzgehäuse untergebrachten Filtereinsätze.

Durch das Herausführen des Durchgangskanals vom Entnahmezum Schluckbrunnen in einer vorteilhaften Weiterbildung der Anordnung dieser Erfindung bis oberhalb der Erdoberfläche ist es möglich, das Grundwasser in außerhalb des Brunnenschachtes angeordneten Behandlungsanlagen weiter zu reinigen und aufzubereiten, wobei diese Behandlungsanlage zweckmäßigerweise innerhalb des Durchgangskanals angeordnet sein kann, bevor das Grundwasser über den Durchgangskanal wieder in den Schacht eingeleitet wird. Das Ende des Durchgangskanals befindet sich dabei oberhalb des Grundwasserspiegels in der als Schluckbrunnen dienenden oberen Hälfte des Brunnenschachtes. Vorteilhafterweise kann die Umwälzpumpe ebenfalls im Durchgangskanal und oberhalb der Erdoberfläche angeordnet sein. Dadurch vereinfacht sich die Stromversorgung und die Reparaturmöglichkeiten für die Pumpe.

Nachfolgend werden zwei Ausführungsbeispiele einer Anordnung gemäß der Erfindung anhand der beiliegenden Zeichnung näher erläutert.

Im einzelnen zeigen:
- Fig. 1: einen schematischen Längsschnitt durch eine in einen gebohrten Brunnenschacht eingebrachte erste Anordnung;
- Fig. 2: einen schematischen Längsschnitt durch eine zweite Ausführungsform der Anordnung.

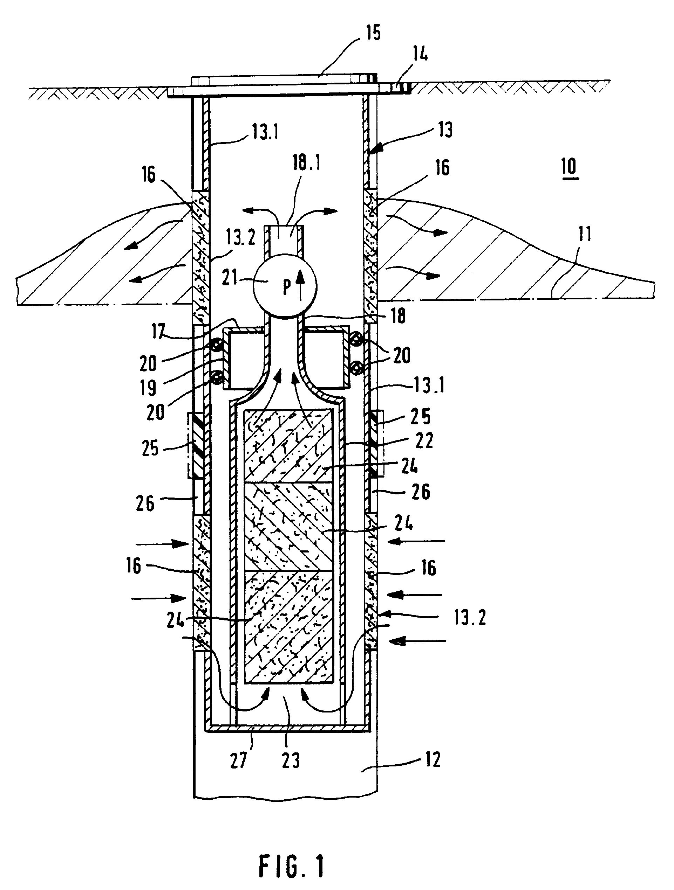

Bei der Anordnung nach Fig. 1 ist in einen verunreinigten Bodenbereich 10, der bis zu einem Spiegel 11 mit Grundwasser durchsetzt ist, ein Brunnenschacht 12 gebohrt worden. In den Brunnenschacht ist ein Rohrkörper 13 eingesetzt, der aus wasserundurchlässigen Wandungsabschnitten 13.1 und wasserdurchlässigen Wandungsabschnitten 13.2 zusammengesetzt ist. Der Rohrkörper 13 liegt mit einem Flansch 14 auf dem Öffnungsrand des Brunnenschachtes 12 auf und ist mittels eines Deckels 15 verschließbar. Vor den wasserdurchlässigen Wandungsabschnitten 13.2 sind Ringfilter 16 angeordnet, deren Aufbau sich nach der Art der zu entfernenden Verunreinigungen richtet. Beispielsweise können hier mit einer wasserdurchlässigen Schutzhülle versehene Aktivkohlefilterringe Verwendung finden.

In den Rohrkörper 13 ist unterhalb des Grundwasserspiegels 11 eine Trennwandung 17 eingesetzt, die eine Öffnung aufweist, in welche ein rohrförmiger Durchgangskanal 18 eingesetzt ist. Die Trennwandung 17 bildet den Boden eines topfartigen Einsatzkörpers 19, an dessen Außenmantel zwei aufblasbare Klemmschläuche 20 angeordnet sind, die nach dem Einbringen des Einsatzkörpers zu seinem Festspannen an einem wasserundurchlässigen Wandungsabschnitt 13.1 des Rohrkörpers 13 aufgeblasen werden. Innerhalb des rohrförmigen Durchgangskanales 18, dessen obere Öffnung 18.1 oberhalb des Grundwasserspiegels 11 im Bereich eines wasserdurchlässigen Wandungsabschnitts 13.2 des Rohrkörpers 13 liegt, ist eine elektrisch betriebene Umwälzpumpe 21 angeordnet. In seinem unteren Abschnitt ist der rohrförmige Durchgangskanal 18 zu einem zylindrischen Gehäuse 22 erweitert, das eine untere Eintrittsöffnung 23 aufweist und das mit mehreren Filtereinsätzen 24 gefüllt ist.

Der wasserundurchlässige Wandungsbereich 13.1, an welchem der die Trennwandung 17 aufweisende Einsatzkörper 19 verankert ist, liegt zwischen zwei wasserdurchlässigen Wandungsabschnitten 13.2 und ist auf seiner Außenseite mit einer Dichtungsmanschette 25 versehen, die eine Abdichtung des zwischen der Wandung des Brunnenschachtes 12 und dem Rohrkörper 13 bestehenden Ringspaltes 26 ergibt. Der Rohrkörper 13 ist beim dargestellten Ausführungsbeispiel an seinem inneren Ende durch eine Stirnwandung 27 verschlossen.

Durch den Betrieb der Umwälzpumpe 21 wird in den Rohrkörper 13 durch die unteren Ringfilter 16 eindringendes Grundwasser in das Gehäuse 22 mit den Filtereinsätzen 24 eingesaugt und durch die Filtereinsätze 24 und den Durchgangskanal 18 hindurch in den durch die Trennwandung 17 abgeteilten oberen, oberhalb des Grundwasserspiegels 11 befindlichen Raum des Rohrkörpers 13 gefördert, wie durch eingezeichnete Pfeile angedeutet ist. Von dort kann das hochgeförderte Grundwasser durch das obere Ringfilter 16 hindurch in den umgebenden Bodenbereich 10 ausströmen. Durch die äußere Dichtungsmanschette 25 ist das hochgeförderte Grundwasser daran gehindert, durch den Ringspalt 26 zurück in den Brunnenschacht 12 zu fließen. Das durch die Filter gereinigte Grundwasser wird also wieder in das Erdreich 10 zurückgeleitet, wo es erneut Verunreinigungen aufnehmen kann, bevor es in den Brunnenschacht 12 zurückfließt.

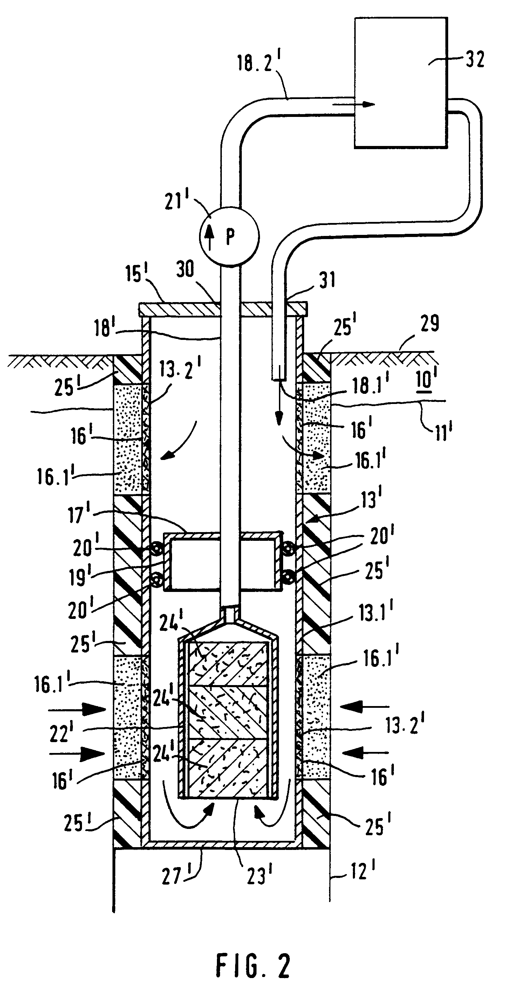

Bei der Anordnung nach Fig. 2 verläuft der Durchgangskanal 18' oberhalb der Trennwandung 17' durch die gesamte obere Hälfte des Rohrkörpers 13' und tritt durch eine erste Öffnung 30 im Deckel 15' aus dem Rohrkörper 13' an die Erdoberfläche 29 und anschließend durch eine zweite Öffnung 31 im Deckel 15' wieder in den Rohrkörper 13' ein. In dem oberhalb der Erdoberfläche 29 liegenden Abschnitt 18.2' des Durchgangskanals 18' sind eine Umwälzpumpe 21' sowie eine Behandlungsanlage 32 zur weiteren Reinigung und Aufbereitung des Grundwassers angeordnet. Die Behandlungsanlage 32 kann beispielsweise einen Kältereaktor zum Ausfrieren von Schmutzpartikeln oder eine Begasungsanlage für das Grundwasser enthalten. Dabei kann die Behandlungsanlage 32 gleichzeitig als Meß- und Kontrollstation für die durch die Reinigung erzielte Qualität des Grundwassers eingesetzt werden.

Durch die Umwälzpumpe 21' wird durch die wasserdurchlässigen Wandungsabschnitte 13.2' des Rohrkörpers 13' eindringendes Grundwasser in das mit Filtereinsätzen 24' gefüllte zylindrische Gehäuse 22' von der Unterseite 23' her eingesaugt und über den Durchgangskanal 18' durch die Trennwandung 17', den Deckel 15' an die Erdoberfläche 29 geleitet, wo das Grundwasser die Umwälzpumpe 21' passiert und die Behandlungsanlage 32 erreicht. Nach Verlassen der Behandlungsanlage 32 gelangt das gereinigte und/oder aufbereitete Grundwasser über den oberhalb der Erdoberfläche führenden Abschnitt 18.2' des Durchgangskanals und die Öffnung 31 im Deckel 15' wieder in das Innere des Rohrkörpers 13', wo es den Durchgangskanal 18' durch dessen Endöffnung 18.1', die oberhalb des Grundwasserspiegels 11' angeordnet ist, verläßt und durch den oberen wasserdurchlässigen Wandungsabschnitt 13.2' des Rohrkörpers 13' wieder in das umliegende Erdreich abfließt. Dabei wird das Grundwasser nochmals durch das am wasserdurchlässigen Wandungsabschnitt 13.2' angeordnete Ringfilter 16' und den Filterkies 16.1' gereinigt.

Die Anordnung kann auch ohne die Ringfilter 16, 16' allein mit den inneren Filtereinsätzen 24, 24' betrieben werden. Auch könnte die Stirnwandung 27, 27' des Rohrkörpers 13, 13' als Filterwandung ausgebildet sein.

## Patentansprüche

1. Anordnung zum Reinigen von verunreinigtem Grundwasser und dem von ihm durchströmten Erdreich (10), mit einem bis in den Bereich des zu reinigenden Grundwassers getriebenen Schacht (12) mit einer bereichsweise wasserdurchlässigen und bereichsweise wasserundurchlässigen Schachtwandung, gekennzeichnet durch eine unterhalb des Grundwasserspiegels (11) in einen zwischen wasserdurchlässigen Schachtwandungsabschnitten (13.2) liegenden wasserundurchlässigen Abschnitt (13.1) der Schachtwandung dicht einsetzbare Trennwandung (17), die eine Öffnung für einen Durchgangskanal (18) aufweist, der Teil des Strömungsweges einer Umwälzpumpe (21) ist und oberhalb des Grundwasserspiegels (11) im Brunnenschacht (12/13) endet, und daß im Bereich des Brunnenschachtes (12) Filter (16, 24) im Strömungsweg der Umwälzpumpe (21) angeordnet sind.

2. Anordnung nach Anspruch 1, dadurch gekennzeichnet, daß die Filter mindestens teilweise als Ringfilter (16) vor wasserdurchlässigen Abschnitten (13.2) der Schachtwandung oberhalb und/oder unterhalb der Trennwandung (17) angeordnet sind.

3. Anordnung nach Anspruch 1 oder 2, dadurch gekennzeichnet, daß die Umwälzpumpe (21) innerhalb des Durchgangskanales (18) angeordnet ist.

4. Anordnung nach einem der Ansprüche 1 bis 3, dadurch gekennzeichnet, daß der Durchgangskanal (18) auf einer Seite der Trennwandung (17) zu einem Filtereinsätze (24) aufweisenden Gehäuse (22) erweitert ist, dessen Außenwandung mit Abstand von der Schachtwandung (13) verläuft.

5. Anordnung nach Anspruch 4, dadurch gekennzeichnet, daß das Filtereinsatzgehäuse (22) an seinem von der Trennwandung (17) entfernten Ende eine Wassereinlaß- oder -auslaßöffnung (23) aufweist.

6. Anordnung nach einem der Ansprüche 1 bis 5, dadurch gekennzeichnet, daß die Brunnenschachtwandung (13) in dem auch die Trennwandung (17) aufweisenden wasserundurchlässigen Abschnitt (13.1) mit einer Außendichtung (25) versehen ist.

7. Anordnung nach einem der Ansprüche 1 bis 6, dadurch gekennzeichnet, daß die Trennwandung (17) durch einen topfartigen Einsatzkörper (19) gebildet ist, der auf seinem Außenmantel mit mindestens einem aufblasbaren Klemmschlauch (20) als Befestigungsorgan versehen ist.

8. Anordnung nach Anspruch 1, dadurch gekennzeichnet, daß der Durchgangskanal (18') teilweise außerhalb der Schachtbohrung (12') und über der Erdoberfläche (29) geführt ist.

9. Anordnung nach Anspruch 8, dadurch gekennzeichnet, daß innerhalb des Durchgangskanals (18') in seinem über der Erdoberfläche (29) verlaufenden Abschnitt (18.2') eine Behandlungsanlage (32) für das zu reinigende Grundwasser angeordnet ist.

10. Anordnung nach Anspruch 8 oder 9, dadurch gekennzeichnet, daß die Umwälzpumpe (21') innerhalb des Durchgangskanals (18') in seinem über der Erdoberfläche (29) verlaufenden Abschnitt (18.2') angeordnet ist.

## Claims

1. Arrangement for cleaning soiled groundwater and the soil (10̸) it flows through, comprising a shaft (12), which is driven into the area of groundwater to be cleaned and which has a sectionally water-permeable and sectionally water-impermeable shaft wall, **characterised by** a separating wall (17), which is tightly fitted below water lever (11) into a water-impermeable section (13.1) of the shaft wall located between water-permeable shaft-wall sections (13.2) and which comprises an opening for a passage (18), which is part of the flow path of a circulating pump (21) and which ends above ground-water level (11) in the well shaft (12/13), and by the arrangement of filters (16, 24) in the area of the well shaft (12) in the flow path of the circulating pump (21).

2. Arrangement according to claim 1, **characterised in that** the filters are arranged at least partially as annular filters (10) in front of water-permeable sections (13.2) of the shaft wall above and/or below the separating wall (17).

3. Arrangement according to claim 1 or 2, **characterised in that** the circulating pump (21) is arranged within the passage (18).

4. Arrangement according to one of claims 1 to 3, **characterised in that** the passage (18) is widened on one side of the separating wall (17) into a housing (22)**,** which comprises filter inserts (24) and the outside wall of which extends at a distance from the shaft wall (13).

5. Arrangement according to claim 4, **characterised in that** the filter-insert housing (22) has a water-inlet or -outlet opening (23) at its end remote from the separating wall (17).

6. Arrangement according to one of claims 1 to 5, **characterised in that** the well-shaft wall (13) is provided with an external seal (25) in the water-impermeable section (13.1) which also accommodates the separating wall (17).

7. Arrangement according to one of claims 1 to 6, **characterised in that** the separating wall (17) is formed by a trough-like inserted body (19), which is provided on its external casing with at least one inflatable clamping hose (20̸) serving as a fixing element.

8. Arrangement According to claim 1, **characterised in that** the passage (18') is guided partially outside the shaft bore (12') and above ground (29).

9. Arrangement according to claim 8, **characterised in that** a treatment unit (32) for groundwater to be cleaned is arranged within, and in an above-ground (29) section (18.2') of the passage (18').

10. Arrangement according to claim 8 or 9, **characterised in that** the circulating pump (21') is arranged within, and in an above-ground (29) section (18,2') of the passage (18').

## Revendications

1. Dispositif pour la purification des eaux souterraines polluées et de la terre (10) traversée par celles-ci avec un puits (12) entraîné jusque dans la zone des eaux souterraines à purifier, avec une paroi de puits en partie perméable à l'eau et en partie imperméable à l'eau, caractérisé par une paroi de séparation (17) pouvant être montée étanche au-dessous du niveau des eaux souterraines (11) dans une section imperméable à l'eau (13.1) de la paroi du puits située entre des sections de la paroi du puits perméables à l'eau (13.2), qui présente une ouverture pour un canal de passage (18) qui est une partie du parcours d'écoulement d'une pompe de recirculation (21) et débouche dans le puits (12/13) au-dessus du niveau des eaux souterraines (11), et en ce que dans la zone du puits (12) des filtres (16, 24) sont disposés dans le parcours d'écoulement de la pompe de recirculation (21).

2. Dispositif selon la revendication 1, caractérisé en ce que les filtres sont disposés au moins partiellement comme des filtres circulaires (16) en amont de sections perméables à l'eau (13.2) de la paroi du puits au-dessus et/ou au-dessous de la paroi de séparation (17).

3. Dispositif selon la revendication 1 ou 2, caractérisé en ce que la pompe de recirculation (21) est disposée à l'intérieur du canal de passage (18).

4. Dispositif selon l'une des revendications 1 à 3, caractérisé en ce que le canal de passage (18) est élargi sur un côté de la paroi de séparation (17) en un boîtier (22) présentant des cartouches filtrantes (24), dont la paroi extérieure présente un écartement avec la paroi du puits (13).

5. Dispositif selon la revendication 4, caractérisé en ce que le boîtier de cartouches filtrantes (22) présente à son extrémité éloignée de la paroi de séparation (17) une ouverture d'entrée ou d'évacuation de l'eau (23).

6. Dispositif selon l'une des revendications 1 à 5, caractérisé en ce que dans la section imperméable à l'eau (13.1) présentant également la paroi de séparation (17), la paroi du puits (13) est munie d'une garniture extérieure (25).

7. Dispositif selon l'une des revendications 1 à 6, caractérisé en ce que la paroi de séparation (17) est formée par un corps de cartouche en forme de pot (19) qui est muni sur son enveloppe extérieure d'au moins un tuyau de serrage gonflable (20) en tant qu'organe de fixation.

8. Dispositif selon la revendication 1, caractérisé en ce que le canal de passage (18') est conduit partiellement à l'extérieur du perçage du puits (12') et au-dessus de la surface de la terre (29).

9. Dispositif selon la revendication 8, caractérisé en ce qu'à l'intérieur du canal de passage (18') dans sa section (18.2') située au-dessus de la surface de la terre (29) est disposée une installation de traitement (32) pour les eaux souterraines à purifier.

10. Dispositif selon la revendication 8 ou 9, caractérisé en ce que la pompe de recirculation (21') est disposée à l'intérieur du canal de passage (18') dans sa section (18.2') située au-dessus de la surface de la terre (29).
